(19) Europäisches Patentamt
European Patent Office
Office européen des brevets

(11) Veröffentlichungsnummer: **0 025 998**
**B1**

(12) **EUROPÄISCHE PATENTSCHRIFT**

(45) Veröffentlichungstag der Patentschrift: **18.05.83**

(51) Int. Cl.³: **C 07 C 91/04,** C 08 G 65/08

(21) Anmeldenummer: **80105669.8**

(22) Anmeldetag: **20.09.80**

(54) **Polyetherpolyamine, deren Salze und deren Verwendung.**

(30) Priorität: **25.09.79 DE 2938623**
**05.05.80 DE 3017198**

(43) Veröffentlichungstag der Anmeldung:
**01.04.81 Patentblatt 81/13**

(45) Bekanntmachung des Hinweises auf die Patenterteilung:
**18.05.83 Patentblatt 83/20**

(84) Benannte Vertragsstaaten:
**BE CH DE FR GB IT LI NL**

(56) Entgegenhaltungen:

DE-A-1 570 577
DE-A-2 435 713
DE-A-2 738 538
DE-A-2 833 170
US-A-3 029 125
US-A-3 029 208
US-A-4 163 727

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt/Main 80 (DE)**

(72) Erfinder: **Diery, Helmut, Dr., Theresenstrasse 45, D-6233 Kelkheim (Taunus) (DE)**
Erfinder: **Wagemann, Wolfgang, Dr., Beektwiete 2a, D-2071 Tremsbüttel (DE)**
Erfinder: **Weide, Joachim, Im Stückes 63, D-6233 Kelkheim (Taunus) (DE)**
Erfinder: **Deubel, Reinhold, Dr., Geierfeld 51, D-6232 Bad Soden am Taunus (DE)**
Erfinder: **Hille, Martin, Dr., In den Eichen, D-6237 Liederbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Polyetherpolyamine, deren Salze und deren Verwendung

Aus der DE-OS 2 435 713, DE-OS 1 570 577 und der US-PS 4 163 727 sind bereits oxalkylierte Polyamine bekannt, die jedoch keinen langkettigen Alkylrest enthalten. Weiterhin sind oxalkylierte Polyamine aus der US-PS 3 029 208, US-PS 3 029 125 und der DE-OS 2 738 538 bekannt, wobei diese Verbindungen aber eine lange Alkylgruppe im Molekül enthalten. Es wurde nun gefunden, dass man nur dann Verbindunden erhält, die als Dispergiermittel die Herstellung fliessfähiger Pigmentdispersionen erlauben, wenn man solche Polyamine oxalkyliert, die zwei lange Alkylgruppen im Molekül enthalten.

Gegenstand der Erfindung sind somit Polyetherpolyamine der Formel 1

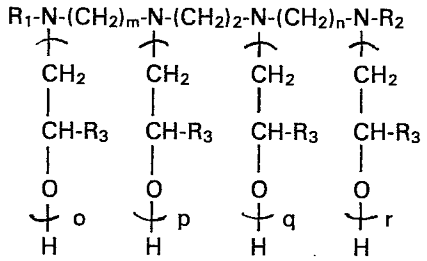

(1)

erhalten durch Oxalkylierung einer Verbindung der Formel 2

$$R_1\text{-}NH\text{-}(CH_2)_m\text{-}NH\text{-}(CH_2)_2\text{-}NH\text{-}(CH_2)_n\text{-}NHR_2 \quad (2)$$

worin $R_1$ und $R_2$ gleich oder verschieden sind und $C_8$-$C_{30}$-Alkyl, -2-Hydroxyalkyl oder -Alkenyl oder $C_8$-$C_{24}$-Alkoxypropyl, m und n 2 oder 3, $R_3$ Wasserstoff oder Methyl bedeuten und die Summe o + p + q + r eine Zahl von 4 bis 600 beträgt, sowie deren Salze.

Bevorzugt sind solche Verbindungen der Formel 1 worin $R_1$ und $R_2$ gleich sind und $C_8$-$C_{18}$-Alkyl, -2-Hydroxyalkyl oder -Alkenyl, m = n = 3 und $R_3$ Wasserstoff oder Methyl bedeuten.

Die Herstellung dieser Verbindungen der Formel 1 erfolgt durch Oxalkylierung nach bekannten Methoden von Verbindungen der Formel 2

$$R_1\text{-}NH\text{-}(CH_2)_m\text{-}NH\text{-}(CH_2)_2\text{-}NH\text{-}(CH_2)_n\text{-}NHR_2 \quad (2)$$

Diese Oxalkylierung wird vorzugsweise bei Temperaturen von 130 bis 180°C und einem Alkylenoxid-Druck von 2 bis 5 bar durchgeführt. Geeignete Katalysatoren sind beispielsweise Natriumhydroxid und Natriummethanolat.

Je nach Erfordernis kann man die Amine der Formel 2 zunächst mit Propylenoxid und anschliessend mit Ethylenoxid oder umgekehrt behandeln. Es können aber auch Mischungen der beiden Alkylenoxide eingesetzt werden, wobei Ethylen- und Propylenoxid dann statistisch über die Oxalkylketten verteilt sind.

Produkte mit besonders guten Eigenschaften erhält man, wenn man die Amine der Formel 2 zunächst mit Propylenoxid und dann mit Ethylenoxid reagieren lässt. Ebenso können die Amine der Formel 2 auch nur mit einem der Alkylenoxide allein umgesetzt werden. In diesem Falle ist Ethylenoxid das bevorzugte Reagens. Soll das Produkt der Formel 1 sowohl Propylenoxid- als auch Ethylenoxidgruppen enthalten, so ist es von Vorteil, das Verhältnis von Propylenoxid zu Ethylenoxid so zu wählen, dass von der Summe o + p + q + r ca. 4 bis 80 Gew.-% auf das Propylenoxid und der Rest auf das Ethylenoxid entfallen. Bekanntlich erhält man bei Oxalkylierungsreaktionen Produkte, die in ihrem Oxalkylierungsgrad mehr oder weniger differieren, so dass im vorliegenden Fall die Summe o + p + q + r den Mittelwert des Alkylenoxidgehaltes angibt. Bevorzugt sind solche Verbindungen, bei denen o, p, q und r ungefähr gleich sind.

Die als Ausgangsprodukte dienenden Amine der Formel 2 werden gemäss der europäischen Patentanmeldung 0 025 997 erhalten, indem man Alkylalkylendiamine der Formel

$$R_1\text{-}NH\text{-}(CH_2)_m\text{-}NH_2 \quad \text{bzw.} \quad R_2\text{-}NH\text{-}(CH_2)_n\text{-}NH_2$$

bei Raumtemperatur bis ca. 50°C in einem Alkohol als Lösungsmittel mit einer wässrigen Lösung von Glyoxal umsetzt. Das dabei erhaltene Bisaldimin der Formel

$$R_1\text{-}NH\text{-}(CH_2)_m\text{-}N{=}CH\text{-}CH{=}N\text{-}(CH_2)_n\text{-}NH\text{-}R_2$$

wird dann katalytisch zu den Verbindungen der Formel 2 hydriert.

Die erfindungsgemässen Produkte sind braune, mehr oder weniger viskose Flüssigkeiten, die bei höherem Oxalkylierungsgrad pastösen oder wachsartigen Charakter annehmen können.

Diese Verbindungen, vorzugsweise solche, bei denen die Summe von o + p + q + r eine Zahl von 60 bis 450 beträgt, eignen sich hervorragend als Dispergiermittel für die Herstellung von Dispersionen von Pigmenten, Farbstoffen und optischen Aufhellern, sowie für die Formulierung von Pflanzenschutz- und Schädlingsbekämpfungsmitteln. Man kann sie allein oder in Kombinationen mit anderen tensidischen Verbindungen und anderen Zusatz- und Hilfsstoffen anwenden.

Die wasserfreien erfindungsgemässen Verbindungen sind in jedem Verhältnis mit Wasser bzw. Wasser/Alkohol-Gemischen verdünnbar und eignen sich dadurch besonders gut zur Herstellung von hochkonzentrierten, fliessfähigen Dispersionen organischer und anorganischer Pigmente.

Die Herstellung solcher Pigmentdispersionen erfolgt in bekannter Weise, indem man die Pigmente, wie z.B. Azopigmente, verlackte Azopigmente, Triphenylmethanpigmente, Thioindigopigmente, Perylentetracarbonsäurepigmente, Dioxanzinpigmente, Chinacridonpigmente, Phthalocyaninpigmente oder anorganische Pigmente mit den erfindungsgemässen Verbindungen unter Zusatz von Äthylenglykol, Wasser und gegebenenfalls geringen Mengen anderer Dispergiermittel in einer geeigneten Dispergiervorrichtung, wie z.B. einer Rührwerksmühle oder einem Doppelmuldenkneter dispergiert. Zur Herstel-

lung im Kneter verfährt man in der Weise, dass man die erfindungsgemässen Dispergiermittel und wenig Wasser im Kneter vorlegt, die Pigmente portionsweise einträgt, gegebenenfalls unter Zusatz von geringen Mengen andere Dispergiermittel und bei zäher Konsistenz knetet. Nach erfolgter Feinverteilung wird unter Zugabe von z.B. Äthylenglykol und Wasser auf die gewünschte Farbstärke und Konsistenz verdünnt. Beim Einsatz einer Rührwerksmühle werden die Pigmente in einem Gemisch aus dem oben beschriebenen Dispergiermittel, Äthylenglykol und Wasser, evtl. geringer Mengen anderer Dispergiermittel durch Verrühren zu einem Teig homogenisiert. Diese pumpfähige Suspension wird dann im allgemeinen in einer kontinuierlichen Rührwerksmühle mit Quarzitperlen von ca. 1 mm ∅ in evtl. mehreren Durchgängen bis zur gewünschten Feinheit gemahlen. Anschliessend kann mit Wasser oder z.B. Äthylenglykol als Wasserrückhaltemittel auf die gewünschte Farbstärke eingestellt werden. Das Verhältnis von Dispergiermittel zu Pigmentpulver kann in weiten Grenzen variieren und beträgt im allgemeinen 0,1 bis 0,2 Gewichtsteile Verteilungsmittel auf einen Teil trockenes Pigmentpulver.

Die so erhaltenen Pigmentdispersionen eignen sich zum Einfärben von Dispersionsfarben für Innen- und Aussenanstriche, für den Einsatz im textilen Pigmentdruck oder für den Einsatz in wässrige Flexo- bzw. Tiefdruckfarben, besonders in Verbindungen mit Alkoholzusätzen. Die hervorragenden Netz- und Dispergiereigenschaften der beschriebenen Dispergiermittel kommen bei den niedrigen Einsatzmengen, bezogen auf die Pigmentgehalte in den Dispersionen, zum Tragen. Helle und brillante Farbtöne werden beim Flexo- und Tiefdruck durch die geringe Eigenfärbung der beanspruchten Dispergiermittel nicht beeinträchtigt.

Darüberhinaus eignen sich die erfindungsgemässen Polyetheramine, bevorzugt solche, deren Summe $o + p + q + r$ eine Zahl von 4 bis 150 ist, sowie deren Salze auch als Korrosionsinhibitoren, Demulgatoren und Säureverzögerungsmittel bei der Gewinnung und Aufbereitung von Erdöl und Erdgas.

Anlagen in Erdölfeldern bestehen fast ausnahmslos aus einfachem Kohlenstoffstahl. Strömt nahezu reines Rohöl durch die Leitungen, wie es in der Anfangsphase der Ölförderung der Fall ist, dann ist die Korrosion gering. Wird aber Wasser mit gefördert, das zunächst emulsionsartig im Rohöl verteilt ist, dann aber durch Zusatz von Demulgatoren abgetrennt wird, werden Leitungen und Anlagen in den unteren Teilen durch Wasser benetzt. Mit zunehmendem Elektrolyt-, Schwefelwasserstoff- und Kohlendioxidgehalt steigt auch die Korrosivität dieser Wässer, was zu signifikanter Verkürzung der Lebensdauer der Ölfeldanlagen führt.

Diese Korrosion kann wirkungsvoll durch kationische Tenside inhibiert werden. Eine optimale Inhibierung der Ölfeldanlagen ist möglich, wenn spätestens mit Beginn der Zugabe von Spaltern auch Korrosionsinhibitoren zur Minimierung des korrosiven eingesetzt werden. Leider erfolgt dies zumeist erst dann, wenn bereits ernsthafte Korrosionsschäden aufgetreten sind. Besonders vorteilhaft ist es, als Korrosionsinhibitoren solche kationischen Tenside einzusetzen, die neben der Inhibierung der Korrosion durch die aggressiven Wässer gleichzeitig die Rohölemulsionen demulgieren. Für bestimmte Rohöle werden derartige Verbindungen gemäss DE-PS 2 238 995 allein oder in Kombinationen mit handelsüblichen nichtionischen Spaltern bereits erfolgreich in der Praxis eingesetzt. Vom ökonomischen Standpunkt ist es darüberhinaus wünschenswert, solche kationischen Korrosionsinhibitoren und Demulgatoren einzusetzen, deren Kombinationen mit bekannten nichtionischen Spaltern zu synergistischen Effekten führt, so dass die Menge an nichtionischer Komponente gleichzeitig reduziert werden kann.

Anstelle der basischen Polyetherpolyamine der Formel 1 kann man zu diesem Zweck ebenso gut deren Salze verwenden, wie etwa Salze mit anionischen Tensiden. Als anionische Tenside seien hierbei genannt Alkylsulfonsäuren mit $C_8$-$C_{30}$-Alkyl, Alkylethersulfonsäuren mit $C_8$-$C_{30}$-Alkyl und 1 bis 10 Mol Ethylenoxid im Molekül, Alkenbenzolsulfonsäuren mit 1 bis 3 Alkylresten am Benzolkern, die jeweils 1 bis 12 C-Atome enthalten, Alkylbenzolethersulfonsäuren mit 1 bis 3 $C_1$-$C_{12}$-Alkylresten am Benzolkern und 1 bis 10 Mol EO im Molekül, Alkylnaphthalinsulfonsäuren mit 1 bis 3 $C_1$-$C_{12}$-Alkylresten am aromatischen Kern, saure Mono- und Dialkylphosphorsäureester mit $C_8$-$C_{30}$-Alkylresten, saure Mono- und Dialkyletherphosphorsäureester mit $C_8$-$C_{30}$-Alkylresten und 1 bis 10 Mol EO sowie saure Mono- und Dialkylphenol-etherphosphorsäureester mit 1 bis 3 $C_1$-$C_{12}$-Alkylresten am Benzolkern und 1 bis 10 Mol EO im Molekül. Darüberhinaus kommen auch die Salze mit einfachen organischen Säuren oder mit anorganischen Säuren in Frage, wie beispielsweise Salzsäure, Schwefelsäure, Phosphorsäure oder Essigsäure.

Besonders bevorzugte Neutralisationsmittel sind Dodecylbenzolsulfonsäure sowie saure Mono- und Di-Nonylphenolpolyglykoletherphosphate.

Bei der Ausprüfung der Eigenschaften der erfindungsgemässen Substanzen wurde überraschend gefunden, dass sie nicht nur wirkungsvolle Korrosionsinhibitoren und Demulgatoren darstellen, sondern dass sie sich auch hervorragend dazu eignen, bei Sonden- und Lagerstättenstimulierungsprozessen den Angriff starker Säuren auf die Formation in erwünschter Weise zu verzögern. Zur Stimulierung der Produktion von Erdöl- und Erdgasfördersonden pumpt man in vielen Fällen Säure, vorzugsweise Salzsäure in die Formation ein. Die Säure löst dabei zumeist carbonatische Gesteine des Calciums und Magnesiums auf, was zu einer Erweiterung der Zuflussporen führt, durch die dann grössere Mengen Erdöl bzw. Erdgas zur Fördersonde fliessen und zutage gefördert werden. Maximale Förderraten werden erreicht, wenn die Zuflusskanäle möglichst gleichmässig von der Sonde ausgehend weit in die Lagerstätte hinein aufgeweitet werden. Dies kann nur annähernd erreicht werden, wenn die Salzsäure nicht vollständig in unmittelbarer Sondennähe reagiert. Man setzt deshalb sogenannte «verzögerte Säuren» ein. Dies sind Gemische von Salz- und Essigsäure, organische Säuren, gelierte und emulgierte Säuren. Die erfindungsgemässen Verbindungen reduzieren die Reaktionsgeschwindigkeiten von Salzsäure mit

z.B. Kalkstein erheblich und ermöglichen in einfacher Weise die Formulierung verzögerter Säuren, wenn sie in Konzentrationen bis zu 2% der Salzsäure bzw. dem Salzsäure/Essigsäure-Gemisch zugesetzt werden.

*Beispiel 1*

205 g (0,25 Mol) N,N'-Ditalgfettalkylaminpropylethylendiamin werden in einem 1ℓ-Edelstahl-Autoklav vorgelegt und aufgeschmolzen. Nach Zugabe von 0,3 g frisch gepulvertem Natriumhydroxid wird der Autoklav verschlossen, zweimal mit Stickstoff gespült und unter Rühren aufgeheizt. Bei einer Innentemperatur von 170 bis 175°C wird Propylenoxid aufgedrückt. Der Innendruck soll 5 bis 6 bar möglichst nicht überschreiten. Bei Druckabfall wird weiteres Propylenoxid zugegeben, insgesamt 290 g (5 Mol). Nach beendeter Zugabe wird 2 Stunden bei 170°C nachgerührt. Nach dem Abkühlen wird zur Entfernung von Propylenoxid-Resten mehrmals mit Stickstoff gespült. Man erhält ca. 490 g rötlichbraunes flüssiges Produkt. 330 g (0,17 Mol) dieses Produktes werden in einem 2 ℓ-Edelstahl-Autoklav vorgelegt. Nach Zugabe von 0,2 g frisch gepulvertem Natriumhydroxid, Verschliessen des Autoklaven und Spülen mit Stickstoff, wird unter Rühren auf 130 bis 140°C aufgeheizt und mit dem Aufdrücken von Ethylenoxid begonnen. Der Arbeitsdruck soll 4,5 bar nicht überschreiten, Insgesamt lässt man 1237 g (28,1 Mol) Ethylenoxid zufliessen. Anschliessend wird noch 2 Stunden bei 130°C nachgerührt. Nach dem Abkühlen auf 60°C wird zur Entfernung von Ethylenoxid-Resten mit Stickstoff gespült. Man erhält ca. 1560 g pastöses, braunes Endprodukt der Formel 1, wobei $R_1$ und $R_2$ Talgfettalkyl, $R_3$ = Methyl und Wasserstoff bedeuten und m = n = 3 und o + p + q + r = 185 ist. Das Produkt besitzt ein Molekulargewicht von ca. 9400.

*Beispiel 2*

Gemäss dem 1. Teil von Beispiel 1 werden 205 g (0,25 Mol) N,N'-Ditalgfettalkylaminpropylethylendiamin mit 435 g (7,5 Mol) Propylenoxid umgesetzt. Die gesamte Menge des flüssigen Reaktionsproduktes wird in einen 2 ℓ-Edelstahl-Autoklav überführt und unter den im zweiten Teil von Beispiel 1 beschriebenen Bedingungen mit 880 g (20 Mol) Ethylenoxid umgesetzt. Man erhält ca. 1520 g braunes, pastoröses Produkt mit einem Molgewicht von etwa 6100 wie in Beispiel 1 angegeben, wobei o + p + q + r = 110 ist.

*Beispiel 3*

In einem 1 ℓ-Edelstahl-Autoklav werden 82 g (0,1 Mol) N,N'-Ditalgfettalkylaminpropylethylendiamin aufgeschmolzen. Nach Zugabe von 0,15 g frisch gepulvertem Natriumhydroxid wird der Autoklav verschlossen, zweimal mit Stickstoff gespült und weiter aufgeheizt. Bei einer Temperatur von 130 bis 140°C werden insgesamt 420 g (9,5 Mol) Ethylenoxid zugegeben. Dabei soll der Innendruck 4,5 bar möglichst nicht überschreiten. Nach beendeter Zugabe wird 2 Stunden bei 130°C nachgerührt und anschliessend auf 60°C abgekühlt. Bei dieser Temperatur wird zur Entfernung von Ethylenoxid-Resten mit Stickstoff gespült. Es resultieren ca. 500 g braunes, wachsartiges Produkt der Formel 1, wobei $R_1$ und $R_2$ Talgfettalkyl, $R_3$ H bedeuten und m = n = 3 und o + p + q + r = 95 ist. Das Molakulargewicht beträgt ca. 5000.

*Beispiel 4*

346 g (0,135 Mol) eines gemäss Beispiel 2, 1. Teil mit 30 Mol Propylenoxid umgesetzten N,N'-Ditalgfettalkylaminpropylethylendiamin werden unter den in Beispiel 1 beschriebenen Bedingungen mit 1295 g (29,4 Mol) Ethylenoxid umgesetzt. Es resultieren ca. 1630 g braunes, wachsartiges Produkt mit einem Molgewicht von ca. 12100 und der in Beispiel 1 angegebenen Zusammensetzung, wobei o + p + q + r = 238 ist.

*Beispiel 5*

156 g (0,25 Mol) eines N,N'-Dilaurylalkylaminopropylethylendiamins mit einer Alkylkettenverteilung von etwa 75% $C_{12}$ und 25% $C_{14}$ werden unter den in Beispiel 1 beschriebenen Bedingungen mit 436 g (7,5 Mol) Propylenoxid und daran anschliessend mit 869 g (19,7 Mol) Ethylenoxid umgesetzt. Es resultieren ca. 1450 g braunes, pastöses Endprodukt der Formel 1 mit einem Molekulargewicht von ca. 5900 und folender Konstitution:

$R_1$ = $R_2$ = Laurylalkyl
$R_3$ = Methyl und Wasserstoff
M = n = 3
o + p + q + r = 109

*Beispiel 6*

164 g (0,25 Mol) eines N,N'-Dicocosalkylaminopropylethylendiamins mit einer Alkylkettenverteilung von etwa 7% $C_8$, 6% $C_{10}$, 51% $C_{12}$, 19% $C_{14}$, 8% $C_{16}$ und 9% $C_{18}$ werden unter den in Beispiel 1 beschriebenen Bedingungen mit 436 g (7,5 Mol) Propylenoxid und daran anschliessend mit 858 g (19,5 Mol) Ethylenoxid umgesetzt. Es resultieren ca. 1445 g braunes, pastöses Endprodukt der Formel 1 mit einem Molekulargewicht von ca. 5800 und folgender Konstitution:

$R_1$ = $R_2$ = Cocosalkyl
$R_3$ = Methyl und Wasserstoff
m = n = 3
o + p + q + r = 108.

*Beispiel 7*

1100 g (1,34 Mol) N,N'-Ditalgfettalkylaminpropylethylendiamin werden in einem 5 ℓ-Edelstahl-Autoklav unter den in Beispiel 1 beschriebenen Bedingungen mit 2000 g (34,5 Mol) Propylenoxid umgesetzt (1,5 g NaOH-Katalysator). 100 g (0,043 Mol) des braunen flüssigen Reaktionsproduktes werden nach erneuter Katalysatorzugabe (0,1 g NaOH-Pulver) wie in Beispiel 1 beschrieben mit 555 g (12,6 Mol) Ethylenoxid umgesetzt. Man erhält ca. 650 g braunes, wachsartiges Produkt der Formel 1 mit einem Molekulargewicht von ca. 15000 der folgenden Konstitution:

$R_1$ = $R_2$ = Talgfettalkyl
$R_3$ = Methyl und Wasserstoff
m = n = 3
o + p + q + r = 317.

*Anwendungsbeispiele*

*Anwendungsbeispiel 1*

288 Gew.-Teile Pigment Red 14 (Colour Index No. 12380) werden mit 54 Gew.-Teilen der Verbindung aus Beispiel 3 und ca. 80 Gew.-Teilen Wasser in einem Doppelmuldenkneter etwa 30 Minuten zäh geknetet. Nach erfolgter Feinverteilung wird durch Zugabe von weiteren 118 Gew.-Teilen Wasser und 60 Gew.-Teilen Äthylenglykol verdünnt. Die 48 Gewichtsprozent enthaltende Pigmentpräparation ist dünnflüssig und lagerstabil; sie eignet sich hervorragend zum Anfärben von wässrigen Anstrichfarben und für den Einsatz in wässrigen Flexo- bzw. Tiefdruckfarben.

*Anwendungsbeispiel 2*

Setzt man in Anwendungsbeispiel 1 anstelle der Verbindung aus Beispiel 3 60 Gew.-Teile der Verbindung aus Beispiel 2 ein, so erhält man eine Pigmentpräparation mit entsprechend guten anwendungstechnischen Eigenschaften.

*Anwendungsbeispiel 3*

250 Gew.-Teile eines durch Mischkupplung von diazotiertem 3,3'-Dichlorbenzidin auf Acetessiganilid und Acetessig-p-anisidid im Verhältnise 9 : 1 erhaltenen Pigmentes werden mit 45 Gew.-Teilen der Verbindung aus Beispiel 5 und ca. 65 Gew.-Teilen Wasser in einem Doppelmuldenkneter ca. 2 Stunden zäh geknetet. Nach erfolgter Feinverteilung wird mit 50 Gew.-Teilen Äthylenglykol und 140 Gew.-Teilen Wasser auf einen Pigmentgehalt von 50% verdünnt. Die erhaltene dünnflüssige Pigmentpräparation lässt sich in jedem Verhältnis mit Wasser bzw. wasserhaltigen Bindemittelsystemen verdünnen. Eine gleichgute Pigmentdispersion erhält man, wenn man die Verbindung aus Beispiel 5 durch 45 Gew.-Teile der Verbindung aus Beispiel 1 ersetzt.

*Anwendungsbeispiel 4*

Setzt man in Anwendungsbeispiel 3 anstelle der Verbindung aus Beispiel 5 45 Gew.-Teile der Verbindung von Beispiel 6 ein, so erhält man eine Pigmentdispersion mit entsprechend guten anwendungstechnischen Eigenschaften.

*Anwendungsbeispiel 5*

80 Gew.-Teile Pigment Yellow 74 (Colour Index No. 11741) werden mit 10 Gew.-Teilen der Verbindung aus Beispiel 4 und 70 Gew.-Teilen Wasser unter Zusatz von ca. 700 g Gew.-Teilen Quarzperlen (1 bis 2 mm ∅) als Mahlkörper ca. 1 Stunde in einer 1 ℓ-Rührwerksmühle gemahlen. Nach Beendigung der Mahlung werden dem Mahlgut noch 20 Gew.-Teile Äthylenglykol zugesetzt und die 40 Gew.-% Pigment enthaltende dünnflüssige Pigmentdispersion wird über ein Sieb von den Mahlkörpern abgetrennt. Sie eignet sich hervorragend für den Einsatz in wässrigen Flexo- bzw. Tiefdruckfarben.

*Anwendungsbeispiel 6*

45 Gew.-Teile Pigment Red 184 werden mit 9 Gew.-Teilen der Verbindung aus Beispiel 7 und ca. 25 Gew.-Teilen Wasser in einem Doppelmuldenkneter etwa 1 Stunde zäh geknetet. Nach erfolgter Feinverteilung wird durch Zugabe von weiteren 11 Gew.-Teilen Wasser und 10 Gew.-Teilen Äthylenglykol verdünnt. Die 45 Gew.-% enthaltende Pigmentpräparation ist dünnflüssig und lässt sich in jedem Verhältnis mit Wasser bzw. wasserhaltigen Bindemittelsystemen verdünnen.

Die nachfolgenden Beispiele geben einen Überblick über die Effektivität der erfindungsgemässen Verbindungen als Korrosionsinhibitoren, Demulgatoren und Säureverzögerungsmittel.

In den Beispielen werden folgenden Produkte genannt:

I: Verbindungen der Formel 1: $R_1$ und $R_2$ = Talgfettalkyl, $R_3$ = H, n und m = 3, Summe o, p, q, r = 10

II: Verbindung der Formel 1: $R_1$ und $R_2$ = Talgfettalkyl, n und m = 3, Summe o, p, q und r = 15,8

III: Verbindung der Formel 1: $R_1$ und $R_2$ = Talgfettalkyl, $R_3$ = H, n und m = 3, Summe o, p, q und r = 50

IV: Verbindung der Formel 1: $R_1$ und $R_2$ = Talgfettalkyl, n und m = 3, $R_3$ = H, Summe o, p, q und r = 20, neutralisiert mit 4 Mol Dodecylbenzolsulfonsäure

V: Verbindung der Formel 1: $R_1$ und $R_2$ = Talgfettalkyl, $R_3$ = H, n und m = 3, Summe o, p, q und r = 20, neutralisiert mit 2 Mol Dodecylbenzolsulfonsäure

VI: Verbindung der Formel 1: $R_1$ und $R_2$ = Talgfettalkyl, $R_3$ = H, n und m = 3, Summe o, p, q und r 20, neutralisiert mit 4 Äquivalenten Mono- und Di-Phosphorsäureestern des Nonylphenol-tetraglykolethers

VII: Verbindung der Formel 1: $R_1$ und $R_2$ = Talgfettalkyl, n und m = 3, alkyliert mit 20 Mol propylenoxid und 20 Mol Ethylenoxid

VIII: Verbindung der Formel 1: $R_1$ und $R_2$ = Talgfettalkyl, n und m = 3, oxalkyliert mit 20 Mol Propylenoxid und 60 Mol Ethylenoxid.

*Beispiel 8* Korrosionsinhibierung

Prüfmethode: Es werden Testcoupons aus Kohlenstoffstahl bei 60°C 7 Stunden in gerührtes und ständig von Kohlendioxid durchperltes, salines Wasser (200 g/l) getaucht und anschliessend der Gewichtsverlust bestimmt. Das Wasser enthält unter diesen Bedingungen maximal ca. 0,5 ppm Sauerstoff. Der in % angegebene Schutzwert gibt die Minderung des Metallabtrages gegenüber dem Blindwert an.

| Produkt Nr. | Schutz in % bei Einsatzmengen von 5 ppm | und von 25 ppm |
|---|---|---|
| I | 77 | 86 |
| II | 86 | 88 |
| III | 80 | 86 |
| IV | 73 | 82 |
| V | 81 | 87 |
| VI | 54 | 85 |
| VII | 37 | 71 |
| VIII | 60 | 76 |

*Beispiel 9* Demulgierung von Rohöl

Prüfmethode: Die zu prüfende Rohölemulsion wird in die dafür üblichen kalibrierten Torpedogläser gefüllt, welche dann anschliessend in einem Wasserbad auf die Demulgiertemperatur gebracht werden. Dann erfolgt die Injektion der Spalter mit Feindosiergeräten. Anschliessend wird mit einer Maschine 5 Minuten gleichmässig geschüttelt und dann die Torpedogläser zur Emulgierung der Emulsion wieder in das temperierte Wasserbad gestellt. Als Mass für die Demulgierwirkung wird die abgeschiedene Menge Wasser in % in bestimmten Zeitabständen gemessen. Die Ergebnisse sind den beiden folgenden Tabellen zu entnehmen:

Tabelle 1

Rohöl Tujmaza, Wassergehalt 40 ml pro 100 ml Emulsion, Demulgiertemperatur 45°C, Demulgatoreinsatzmenge 40 ppm

| | Zeit (Min) | | | | | |
|---|---|---|---|---|---|---|
| Produkt | 10 | 20 | 30 | 50 | 100 | 200 |
| I | 17 | 32 | 46 | 57 | 69 | 78 |
| II | 21 | 34 | 51 | 61 | 72 | 82 |
| III | 23 | 39 | 54 | 68 | 83 | 93 |
| IV | 32 | 45 | 57 | 72 | 81 | 94 |
| V | 36 | 48 | 62 | 77 | 88 | 97 |
| VI | 22 | 38 | 55 | 71 | 84 | 94 |
| VII | 42 | 53 | 64 | 78 | 89 | 98 |
| VIII | 29 | 46 | 59 | 75 | 86 | 98 |
| Vergleich* | 38 | 49 | 61 | 74 | 86 | 97 |

* Als Vergleichssubstanz wird ein Demulgator gemäss FR-PS 1 069 615, bestehend aus 58% Propylenoxid und 42% Ethylenoxid, mit ausgeprüft.

Tabelle 2

Rohöl Ahrensheide, Wassergehalt 58 ml pro 100 ml Emulsion, Demulgiertemperatur 50°C, Demulgatoreinsatzmenge 50 ppm

| | Zeit (Min) | | | | | |
|---|---|---|---|---|---|---|
| Produkt | 10 | 20 | 30 | 50 | 100 | 200 |
| I | 8 | 19 | 29 | 47 | 61 | 71 |
| II | 11 | 23 | 35 | 54 | 64 | 75 |
| III | 13 | 25 | 32 | 56 | 68 | 78 |
| IV | 12 | 23 | 41 | 58 | 71 | 82 |
| V | 10 | 22 | 31 | 53 | 65 | 75 |
| VI | 11 | 24 | 36 | 56 | 67 | 76 |
| VII | 22 | 37 | 48 | 66 | 81 | 90 |
| VIII | 33 | 45 | 58 | 77 | 90 | 96 |
| Vergleich * | 27 | 41 | 51 | 72 | 86 | 91 |

*Beispiel 10* Retardierung von Salzsäure

Die Säure wird bei einer bestimmten Temperatur in ein Gefäss gegeben, das Stücke aus Kalkstein enthält. Das sich entwickelnde Kohlendioxid wird aufgefangen und die Zeit für ein bestimmtes Volumen (500 $cm^3$) gemessen. Zuerst wird der Blindwert bestimmt, anschliessend werden mit dem gleichen Kalksteinmaterial je 2 Messungen durchgeführt. Als Verzögerung wird das Verhältnis der gemessenen Zeiten zwischen erfindungsgemässer Substanz und Blindwert angegeben.

| | Verzögerung bei Verbindung | |
|---|---|---|
| Konzentration (%) | I | II |
| 0,2 | 5,0 | 4,7 |
| 0,4 | 9,1 | 9,2 |
| 0,6 | 11,5 | 10,5 |
| 0,8 | 13,5 | 12,4 |
| 1,0 | 16,4 | 15,6 |
| 1,2 | 17,6 | 16,8 |
| 1,4 | 18,4 | 17,4 |
| 1,6 | 19,6 | 18,9 |
| 1,8 | 21,5 | 21,8 |
| 2,0 | 22,0 | 22,6 |

Versuchstemperatur 60°C

**Patentansprüche**

1. Polyetherpolyamine der Formel 1

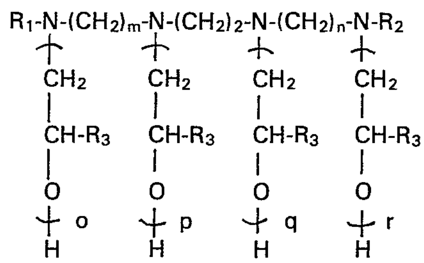

(1)

erhalten durch Oxalkylierung einer Verbindung der Formel 2

$$R_1\text{-NH-}(CH_2)_m\text{-NH-}(CH_2)_2\text{-NH-}(CH_2)_n\text{-NHR}_2 \quad (2)$$

worin $R_1$ und $R_2$ gleich oder verschieden sind und Alkyl, -2-Hydroxyalkyl oder -Alkenyl mit jeweils 8 bis 30 C-Atomen oder $C_8$-$C_{24}$-Alkoxypropyl, m und n 2 oder 3, $R_3$ Wasserstoff oder Methyl bedeuten und die Summe o + p + q + r eine Zahl von 4 bis 600 beträgt, sowie deren Salze.

2. Polyetherpolyamine nach Anspruch 1, wobei $R_1$ und $R_2$ gleich sind und Alkyl, 2-Hydroxyalkyl oder Alkenyl mit jeweils 8 bis 18 C-Atomen, n = m = 3, $R_3$ Wasserstoff oder Methyl bedeuten und die Summe o + p + q + r eine Zahl von 4 bis 150 beträgt.

3. Verbindungen der Formel 1 nach Anspruch 1, worin $R_1$ und $R_2$ gleich sind und $C_8$-$C_{18}$-Alkyl, -2-Hydroxyalkyl oder -Alkenyl, $R_3$ Wasserstoff oder Methyl, m = n = 3 bedeuten und die Summe o + p + q + r 60 bis 450 beträgt.

4. Polyetherpolyamine nach Anspruch 1 in Form ihrer Dodecylbenzolsulfonate und mono- oder di-Nonylphenol-polyethylenglycol-phosphate.

5. Verwendung der Polyetherpolyamine nach Anspruch 1 bis 4 als Dispergiermittel, Korrosionsinhibitoren, Demulagtoren und Säureverzögerungsmittel bei der Gewinnung und Aufbereitung von Erdöl und Erdgas.

## Claims

1. Polyether polyamines of the formula 1

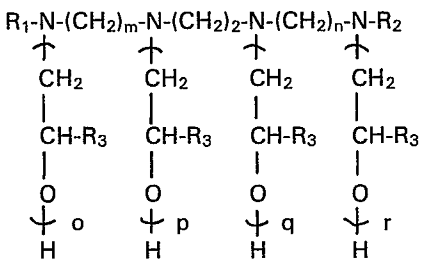

(1)

obtained by oxalkylation of a compound of the formula 2

$$R_1\text{-}NH\text{-}(CH_2)_m\text{-}NH\text{-}(CH_2)_2\text{-}NH\text{-}(CH_2)_n\text{-}NHR_2 \qquad (2)$$

in which $R_1$ and $R_2$ are identical or different and denote $C_8$-$C_{30}$-alkyl, $C_8$-$C_{30}$-2-hydroxyalkyl or $C_8$-$C_{30}$-alkenyl or $C_8$-$C_{24}$-alkoxypropyl, m and n are 2 or 3, $R_3$ is hydrogen or methyl and the sum of o + p + q + r is an integer from 4 to 600, and the salts thereof.

2. Polyether polyamines as claimed in claim 1 in which $R_1$ and $R_2$ are identical and denote $C_8$-$C_{18}$-alkyl, $C_8$-$C_{18}$-2-hydroxyalkyl or $C_8$-$C_{18}$-alkenyl, m = n = 3 and $R_3$ is hydrogen or methyl and the sum of o + p + q + r is an integer in the range of from 4 to 150.

3. Compounds of the formula 1 as claimed in claim 1, in which $R_1$ and $R_2$ are identical and denote $C_8$-$C_{18}$-alkyl, $C_8$-$C_{18}$-2-hydroxyalkyl, or $C_8$-$C_{18}$-alkenyl, $R_3$ is hydrogen or methyl, m = n = 3 and the sum of o + p + q + r is the range fo from 60 to 450.

4. Polyetherpolyamines as claimed in claim 1 in the form of their dodecylbenzene sulfonate and mono- or di-nonylphenol polyethylene glycol phosphate.

5. Use of the polyether polyamines as claimed in claims 1 to 4 as dispersing agents, corrosion inhibitors, demulsifiers and acid retarders in the exploitation and refining of crude oil and natural gas.

## Revendications

1. Polyéther-polyamines répondant à la formule 1

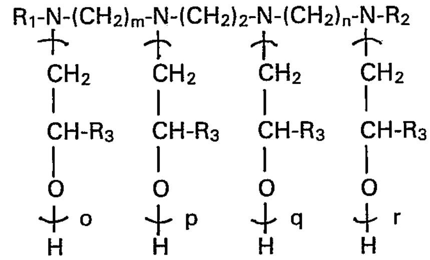

(1)

obtenues par alcoxylation d'un composé de formule 2

$$R_1\text{-}NH\text{-}(CH_2)_m\text{-}NH\text{-}(CH_2)_2\text{-}NH\text{-}(CH_2)_n\text{-}NHR_2 \qquad (2)$$

formules dans lesquelles: $R_1$ et $R_2$ représentent chacun, indépendamment l'un de l'autre, un radical alkyle, un radical hydroxy-2 alkyle ou un radical alcényle contenant chacun de 8 à 30 atomes de carbone ou un radical alcoxypropyle dont la partie alcoxy contient de 8 à 24 atomes de carbone, m et n sont égaux chacun à 2 ou à 3, $R_3$ représente un atome d'hydrogène ou un radical méthyle et (o + p + q + r) est égal à un nombre de 4 à 600, ainsi que leurs sels.

2. Polyéther-polyamines selon la revendication 1 dans lesquelles $R_1$ et $R_2$ sont identiques et représentent chacun un radical alkyle en $C_8$-$C_{18}$, hydroxy-2 alkyle en $C_8$-$C_{18}$ ou alcényle en $C_8$-$C_{18}$, n et m sont égaux chacun à 3, $R_3$ représente un atome d'hydrogène ou un radical méthyle et la somme (o + p + q + r) est égale à un nombre de 4 à 150.

3. Composés de formule 1 selon la revendication 1 dans lesquels $R_1$ et $R_2$ sont identiques et représentent chacun un radical alkyle en $C_8$-$C_{18}$, un radical hydroxy-2 alkyle en $C_8$-$C_{18}$ ou un radical alcényle en $C_8$-$C_{18}$, $R_3$ représente un atome d'hydrogène ou un radical méthyle, m et n sont égaux chacun à 3 et la somme (o + p + q + r) est un nombre de 60 à 450.

4. Polyéther-polyamines selon la revendication 1 sous la forme de leurs dodécyl-benzène-sulfonates et de leurs sels formés avec des mono- et diesters phosphoriques de produits de poly-éthoxylation du nonylphénol.

5. Utilisation des polyéther-polyamines selon l'une quelconque des revendications 1 à 4 comme dispersants, inhibiteurs de corrosion, désémulsionnants et ralentisseurs d'acides dans l'extraction et le traitement du pétrole et du gaz naturel.